# EUROPEAN PATENT SPECIFICATION

(11) **EP 4 366 077 B1**
(45) Date of publication and mention of the grant of the patent: **29.07.2026**
(21) Application number: 22205603.8
(22) Date of filing: 04.11.2022
(51) Int. Cl.: H01P 5/107, H01P 3/123, H01Q 1/22, H01Q 1/52

(54) **A SYSTEM**
SYSTEM
SYSTÈME

(43) Date of publication of application: 08.05.2024
(73) Proprietor: NXP B.V., 5656 AG Eindhoven (NL)
(72) Inventor: Thippur Shivamurthy, Harshitha, 5656 AG Eindhoven (NL); Syeda, Rabia, 5656 AG Eindhoven (NL); Molina Moreno, Rocio Gabriela, 5656 AG Eindhoven (NL); Badiao, Cristine Aguila, 5656 AG Eindhoven (NL); Lok, Pieter, 5656 AG Eindhoven (NL); Buijsman, Adrianus, 5656 AG Eindhoven (NL); van Gemert, Leo, 5656 AG Eindhoven (NL); Lont, Maarten, 5656 AG Eindhoven (NL); Carluccio, Giorgio, 5656 AG Eindhoven (NL); de Graauw, Antonius Johannes Matheus, 5656 AG Eindhoven (NL)
(74) Representative: Krott, Michel

(56) References cited:
- CN-A- 110 690 179
- US-A1- 2020 067 167
- US-A1- 2020 168 974
- US-A1- 2021 218 125
- US-A1- 2022 189 894

## Description

### Field

The present disclosure relates to a system, and, in particular, a system including an integrated circuit package and a waveguide assembly. It also relates to an electronic device comprising said system.

### Background

A launcher in package configuration comprises one or more waveguide launchers or waveguide couplers integrated into a package comprising one or more integrated circuits. A waveguide may be used to route electromagnetic radiation to and/or from the waveguide launcher(s) or waveguide coupler(s). US20210218125 discloses a device comprising an integrated circuit (IC) die, a substrate, a printed circuit board (PCB), an antenna, and a waveguide stub. The IC die is affixed to the substrate, which comprises a signal launch on a surface of the substrate that is configured to emit or receive a signal. The substrate and the antenna are affixed to the PCB, such that the signal launch and a waveguide opening of the antenna are aligned and comprise a signal channel. US20220189894 discloses an integrated circuit package comprising an encapsulant, a semiconductor die in the encapsulant the semiconductor die comprising a plurality of die terminals, an integrated waveguide launcher, wherein the integrated waveguide launcher is connected to one of the die terminals and a land grid array provided on a bottom surface of the package. US20200067167 discloses a radar system including a plurality of radiating waveguides each having a waveguide input and an attenuation component which can be located on a circuit board. The radar system further includes a beamforming network. US20200168974 discloses a transition arrangement including a first transmission line being a planar transmission line including a coupling section and being disposed on a dielectric substrate layer. The substrate layer has a periodic or quasi-periodic structure arranged in the substrate layer such as to be disposed along at least part of the first transmission line and to partly surround the coupling section. CN110690179 discloses a packaging structure of a laminated low-loss chip integrated waveguide.

### Summary

According to a first aspect of the present disclosure there is provided a system according to claim 1.

In one or more embodiments each of the plurality of launchers has a major dimension and a minor dimension, wherein the major dimension is larger than the minor dimension, and wherein each launcher and the opening of its respective one of the plurality of waveguides is arranged such that the major dimension of the opening is parallel to the major dimension of the launcher.

In one or more embodiments each of the plurality of launchers comprises a differential patch launcher and the major dimension comprises a length of the differential patch launcher and the minor dimension comprises a width of the differential patch launcher.

In one or more embodiments each opening of the first waveguide and the second waveguide has a rectangular cross section.

In one or more embodiments each opening of the first waveguide and the second waveguide has a rectangular cross section having rounded corners.

In one or more examples each opening of the first waveguide and the second waveguide has an oval cross section.

In one or more embodiments each opening of the first waveguide and the second waveguide has a dog-bone shaped cross section.

In one or more examples, the dog-bone shaped cross section may comprise an elongate shape having parallel sides in a middle section and at each end of the elongate shape a second section of greater width than the middle section.

In one or more embodiments the first waveguide is spaced apart from the second waveguide by at least a first predetermined distance comprising at least 1 mm.

In one or more embodiments the waveguide assembly comprises a substrate wherein the plurality of waveguides comprise channels that extend through the substrate.

In one or more embodiments the IC package is configured to provide for transmission of signalling via the first waveguide and receipt of signalling via the second waveguide, and wherein the first waveguide and its respective launcher and the second waveguide and its respective launcher are arranged on opposite sides of the waveguide assembly and IC package respectively.

In one or more embodiments the plurality of waveguides are configured such that:
waveguides of the plurality of waveguides that are arranged with their major dimensions perpendicular to one another are spaced apart by a first minimum spacing; and
waveguides of the plurality of waveguides that are arranged with their major dimensions parallel to one another are spaced apart by a second minimum spacing;
wherein the first minimum spacing is smaller than the second minimum spacing.

In one or more examples the microstrip line is rotated about 90 degrees from the output of the IC die to the input to the launcher.

In one or more examples the compensation component is a balun.

In one or more embodiments the differential patch launcher is shaped such that a predetermined location on the differential patch launcher is at ground potential when in use and wherein the system comprises a detector coupled to said differential patch launcher at the predetermined location, wherein the detector is configured to detect current flow in said connection and, based on detection of said current flow, provide a signal.

In one or more embodiments the system includes an interface layer configured to extend between the surface of the waveguide assembly and the IC package, wherein the interface layer may comprise one of:
a conductive material with openings corresponding to each of the plurality of openings in the plurality of waveguides, and
an electromagnetic band-gap structure around each of the plurality of openings in the plurality of waveguides.

According to a second aspect of the present disclosure there is provided an electronic device comprising one of a telecommunication radio interface and a radar system, including the system.

In one or more examples, said IC package comprises one of: a bottom coupling flip-chip-chip-scale-package platform, FC-CSP; a top coupling flip-chip-chip-scale-package possum platform; and top or bottom coupling fan-out-wafer-level-package, FO-WLP.

According to a second aspect of the present disclosure there is provided an electronic device comprising one of a telecommunication radio interface and a radar system, such as an automotive radar system, including the system.

Thus, in an (e.g., automotive) radar system, the system may be configured to transmit the radar signals and/or receive the reflected radar signals via waveguides in the waveguide assembly. In a telecommunication radio interface, the package may be configured to send and/or receive signals to enable communication between a mobile telephone and a base station.

While the disclosure is amenable to various modifications and alternative forms, specifics thereof have been shown by way of example in the drawings and will be described in detail. It should be understood, however, that other embodiments, beyond the particular embodiments described, are possible as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows a side view of an example embodiment of a system comprising a waveguide assembly and an integrated circuit package comprising a plurality of launchers;
Figure 2 shows a cross sectional plan view of the example embodiment of the waveguide assembly of the system along a line A-A of figure 1;
Figure 3 shows a cross sectional plan view of the example embodiment of the integrated circuit package along line B-B of figure 1;
Figure 4 shows a cross sectional plan view of two example waveguide assemblies comprising openings with different cross sectional shapes according to embodiments of the system;
Figure 5 shows a view of an IC package including two launchers in an orthogonal arrangement, each launcher being coupled to a different differential microstrip line, with at least one microstrip line including a compensation component according to an embodiment of the system;
Figure 6 shows an electronic device;
Figure 7 shows an isometric view of a launcher according to an embodiment of the system indicating the relative arrangement of a launcher and an opening in the waveguide assembly; and
Figure 8 shows a side view of the IC package showing the coupling between the IC die and the launcher according to an embodiment of the system.

### Detailed Description

Examples of the present application relate to a launcher in package. A launcher in package comprises an integrated circuit package that includes an integrated circuit in a die as well as a launcher integrated within the package. In one or more examples, a further substrate may be provided within the package and the launcher may be located within the further substrate. In such an example, the launcher may be electrically coupled to the integrated circuit for the transmission and/or receipt of signalling.

In some examples, a plurality of launchers may be provided in the package. As the complexity of systems increase and there is further miniaturization/integration to realize improved performance and low-cost applications, interference between the signals transmitted/received by the launchers increases.

In one or more of the example embodiments described herein, the system is designed to provide improved isolation between waveguides that convey different RF channels whilst maintaining and preferably reducing the size of the overall launcher in package system.

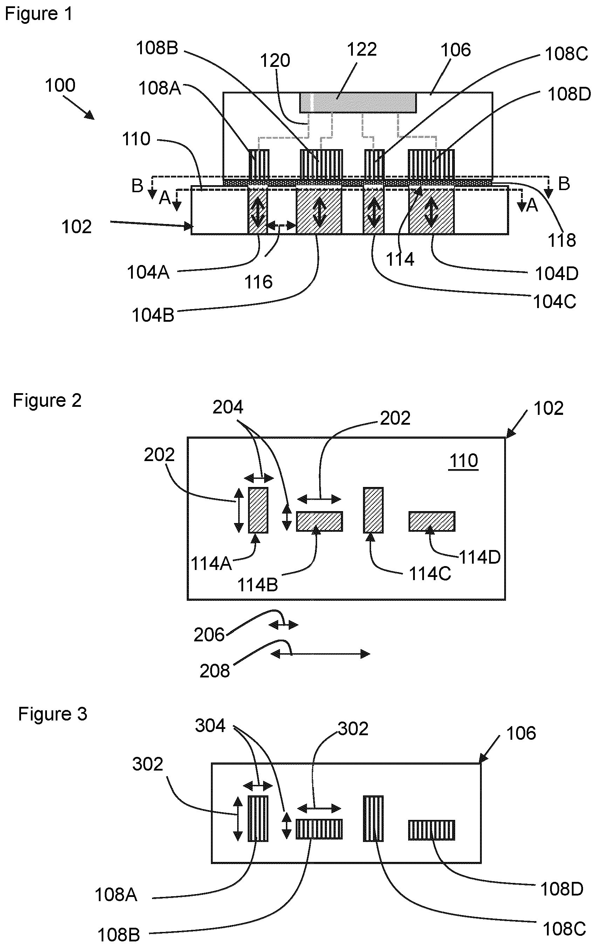

Example figure 1 show a system 100 comprising a waveguide assembly 102 comprising a plurality of waveguides 104A-D and an integrated circuit (IC) package 106. The IC package 106 comprises a plurality of launchers 108A-D. Thus, the IC package comprises a launcher in package arrangement. The IC package further comprises an integrated circuit die 122. The signalling for transmitting by the launchers may be generated by circuitry of the integrated circuit die 122. The signalling received by the launchers may be provided to the circuitry of the integrated circuit die 122 for processing.

A launcher in package arrangement can provide for a number of advantages such as reducing the overall footprint as well as reducing the insertion loss from the package 106 to an antenna and vice versa. The launcher in package arrangement can enable effective use of substrate materials because the launchers can be formed in an appropriate substrate material while the integrated circuit die 122 may be of a different material and the substrates and integrated circuit die 122 are retained together in the package 106.

Thus, to summarise, the system 100 comprises the waveguide assembly 102 comprising a plurality of waveguides. There are at least two waveguides comprising at least a first waveguide 104A and a second waveguide 104D, although in this embodiment four waveguides are provided.

The waveguide assembly, in the present example, comprises a single substrate wherein the plurality of waveguides comprise channels that extend through the substrate.

The first waveguide 104A is aligned with the launcher 108A of the integrated circuit package 106 for one or more of transmitting signalling and receiving signalling therebetween. The second waveguide 104D is aligned with the launcher 108D of the integrated circuit package 106 for one or more of transmitting signalling and receiving signalling therebetween.

Figures 2 and 3 each show a cross section through the system 100 parallel to the surface 110 of the waveguide assembly 102 which is configured to couple to the IC package 106. In particular, figure 2 is a plan view of the waveguide assembly 102 along line A-A and looking down into the waveguide assembly 102 of figure 1 and shows the plurality of openings 114A-D. Figure 3 is a plan view of the IC package 106 along line B-B and looking down through the IC package 106 towards the waveguide assembly 102 in figure 1 and shows the plurality of launchers 108A-D.

In the present example, the cross-sectional shape of the waveguides 104A-D may be configured to reduce interference between signalling conveyed in said waveguides. In particular, the waveguide assembly comprises a surface 110 configured to be coupled to a surface of the IC package so that the launchers 108A-D align with the respective waveguides 104A-D. Each of the plurality of waveguides comprise an opening 114A-D in the surface 110 configured to be aligned with its respective launcher.

Each of the openings 114A-D has a major dimension 202 and a minor dimension 204, wherein the major dimension is larger than the minor dimension. Thus, the openings are generally elongate.

The major dimension 202 of at least the opening 114A of the first waveguide 104A is oriented perpendicular to the major dimension 202 of the opening 114D of the second waveguide 104D. The orthogonal arrangement of the elongate waveguide openings may, in one or more examples, reduce interference between adjacent waveguides, which is advantageous.

The described embodiments may also allow for an increase in the number of waveguides (and therefore corresponding launchers in the package) for a given waveguide assembly 102 or allow the waveguide assembly to be further reduced in size for a given number of waveguides 104. This approach may also allow for more cost effective manufacturing by reducing the materials costs.

It will also be appreciated that the orthogonal arrangement provides for polarisation of adjacent communication channels thereby further reducing the amount of cross talk. Typically, the cross talk becomes more prominent as the separation between channels is decreased, whereas the use of the proposed arrangement can provide a reduced separation whilst maintaining an acceptable level of isolation. It will also be appreciated that in some arrangements, polarisation may be provided by the use of polarising antennas coupled to the output of the waveguide 104.

In one or more examples, the waveguide assembly 102 and the IC package 106 may include an interface layer 118 therebetween. Typically, the interface layer 118 is required to compensate for tolerances in manufacturing and positioning of the IC package 106 with respect to the waveguide assembly 102. Thus, the interface layer 118 allows for improved coupling between the launcher 108 in the IC package 106 and the respective waveguide 104 of the waveguide assembly 102. The improved coupling allows for improved RF performance, low insertion loss and better communication channel isolation.

The interface layer 118 in figure 1 may comprise one of a conductive material with openings that corresponding to each of the plurality of openings 114 in the plurality of waveguides 104, and an electromagnetic band-gap structure around each of the plurality of openings in the plurality of waveguides 104. It will be appreciated that the electromagnetic band-gap structure may comprise periodic structures around the waveguide openings 114A-D.

The launcher elements 502 may have an elongate shape that is complementary to the waveguide opening with which they are associated. Thus, in one or more examples, each of the plurality of launchers 108A-D has a major dimension 302 and a minor dimension 304, wherein the major dimension 302 is larger than the minor dimension 304, and wherein each launcher 108A-D and the opening 114A-D of its respective one of the plurality of waveguides is arranged such that the major dimension 202 of the opening is parallel to the major dimension 302 of the launcher.

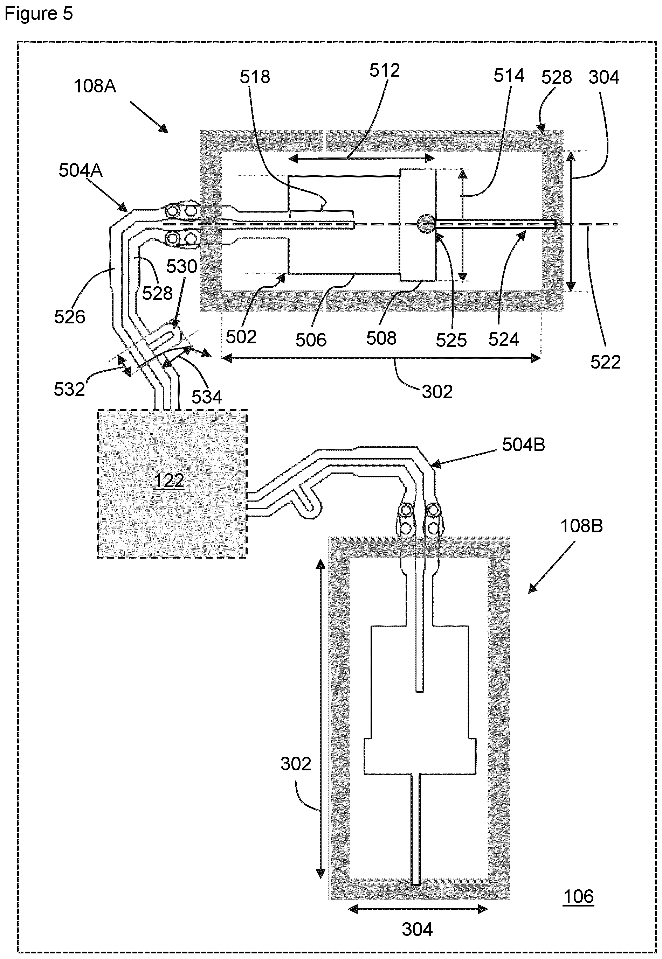

In one or more examples, each of the plurality of launchers 108A-D comprises a differential patch launcher shown in figures 5 to 7 below. The major dimension thus comprises a length 512 of the differential patch launcher and the minor dimension comprises a width 514 of the differential patch launcher.

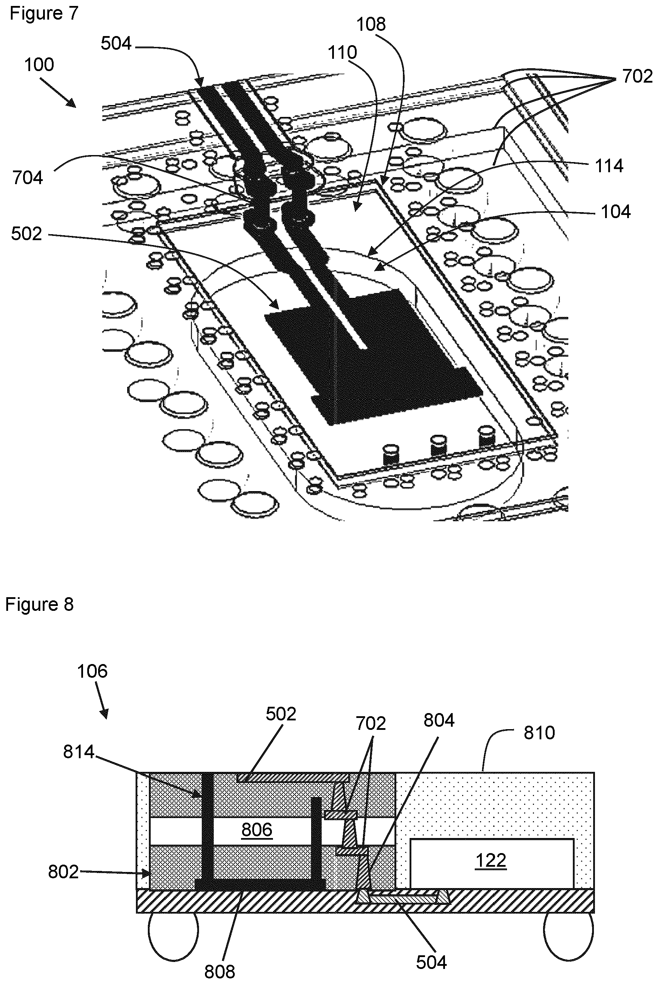

With reference to Figure 8, in one or more examples, each of the launchers 108A-D comprise a cavity 806 defined by side walls 814 and a ground plane 808 and a launcher element 502 located within the cavity 806. In some examples having this configuration, the major dimension may comprises a length of the cavity 302 and the minor dimension comprises a width 304 of the cavity.

The cross-section of the openings and, in one or more embodiments, the cross-section of the waveguides throughout the substrate of the waveguide assembly 102, is elongate. In a first example, each of the opening of the waveguides has a rectangular cross section, as shown in Figure 2.

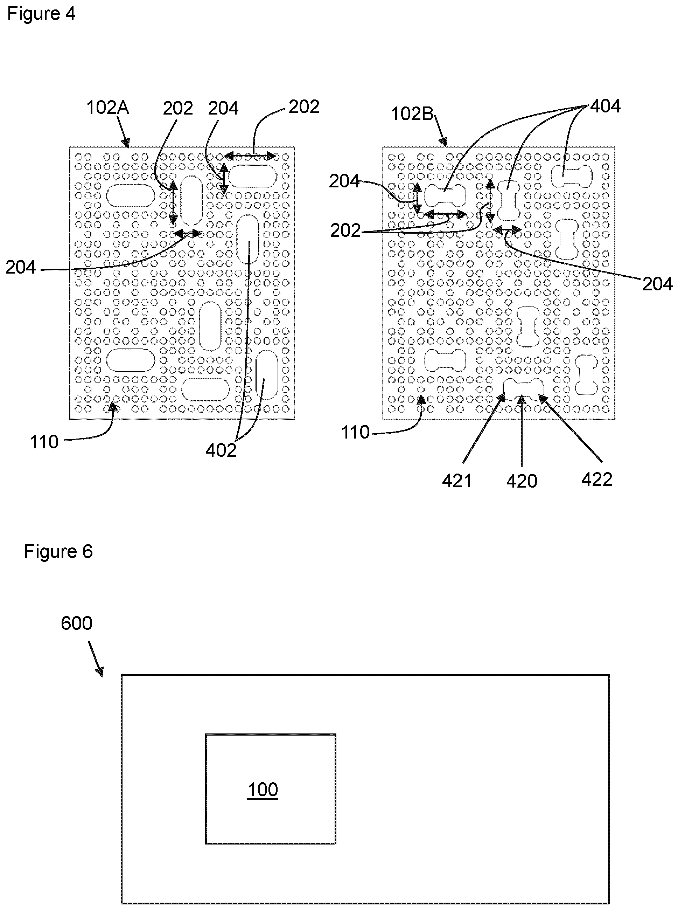

In a second example, shown in Figure 4, each of the opening of the waveguides has a rectangular cross section having rounded corners, as shown in substrate 102A of Figure 2. It will be appreciated that openings which are rectangular with rounded ends 402 or rectangular with rounded corners (not shown) can allow for low cost waveguide assembly manufacturing by utilising simple manufacturing processes such as drilling. Forming square corners can be more challenging and therefore more costly. The use of rectangular openings with rounded ends 402, can therefore allow for more cost effective manufacture whilst maintaining the RF performance of the waveguides 104.

In a third example, each of the openings of the waveguides has an oval cross section (not shown in the figures).

In a fourth example, shown in substrate 102B of Figure 4, each of the opening of the waveguides 404 has a dog-bone shaped cross section. It will be appreciated that the dog-bone shape will be known to those skilled in the art of waveguide design. However, it will be appreciated that the dog-bone shaped cross section comprises an elongate shape having parallel sides in a middle section 420 and at each end of the elongate shape, a second section 421 and 422 of greater width than the middle section. In general, the dog-bone shaped cross section is H-shaped.

In one or more examples, the first waveguide 104A is spaced apart from the second waveguide 104D by at least a first predetermined distance 116, comprising at least 1mm for low cost in some embodiments. In some examples the first predetermined distance may be at least 0.9mm or at least 0.8mm. In other examples the spacing may be more than 1mm or less than 0.8mm.

In one or more examples, the IC package (i.e. the circuity of the integrated circuit die 122) is configured to provide for transmission of signalling via the first waveguide 104A and receipt of signalling via the second waveguide 104D. It may be advantageous in some examples to arrange the "transmission" waveguides and the "receive" waveguides at opposite sides of the waveguide assembly 102. Thus, the first waveguide 104A and its respective launcher 108A and the second waveguide 104D and its respective launcher 108D are arranged on opposite sides of the waveguide assembly 102 and IC package 106 respectively.

The arrangement of the plurality of waveguides in the waveguide assembly may be provided to reduce interference between the signalling conveyed by adjacent waveguides. The arrangement of adjacent waveguides such that their major dimensions are orthogonal may also reduce interference. Thus, orthogonally arranged waveguides may be closer together than non-orthogonally arranged waveguides for a given tolerated interference level.

Thus, in one or more examples, the plurality of waveguides are configured such that:
waveguides of the plurality of waveguides that are arranged with their major dimensions perpendicular to one another are spaced apart by a first minimum spacing 206; and
waveguides of the plurality of waveguides that are arranged with their major dimensions parallel to one another are spaced apart by a second minimum spacing 208;
wherein the first minimum spacing 206 is smaller than the second minimum spacing 208.

With reference to Figure 5, each of the launchers may comprise a differential patch launcher 502 comprising a planar body 506 and having a slot 518 therein extending from an outer edge along a line of symmetry 522 of the planar body. A differential microstrip line 504A, 504B comprising a first line 526 and a second line 528 are coupled to the planar body 506 at opposite sides of the slot 518. In one or more examples the length of the slot 518, which is the distance from the feed end of the differential patch launcher towards the centre of the differential patch launcher may be selected to control the impedance of the differential patch launcher 502.

It may be advantageous to detect electrical connection problems associated with the launchers within the package. In one or more examples, it has been found that electrical connection problems may disrupt the current distribution within the differential patch launcher. Therefore, a comparison of the current in the differential patch launcher relative to a threshold may be indicative of an electrical connection problem somewhere in the package.

In one or more examples, the differential patch launcher is shaped such that a predetermined location on the differential patch launcher is at ground potential when in use. In the example of figure 5, the predetermined location 525 is along the line of symmetry 522 opposite the slot 518. Thus, in this example, the system may comprise a detector (not shown) coupled to said differential patch launcher at the predetermined location 525 by connection 524. The connection 524 is coupled to ground. As the predetermined location 525 is at a virtual ground and the connection 524 is also coupled to ground, no current should flow through the connection 524. The detector is configured to detect current flow in said connection 524 and, based on detection of said current flow, provide a signal. This signal may be considered indicative of an electrical connection fault.

Example figure 6 shows an electronic device 600 comprising, for example, one of a telecommunication radio interface and a radar system, including the system 100.

Additional features of the disclosure will now be described.

In some examples the first waveguide is configured to convey a first communication channel and the second waveguide is configured to convey a second communication channel. In some examples of the system 100, the level of isolation required between channels differs based on the type of communication channel. For example, different levels of isolation may be required based on whether the first and second communication channels are either both transmit channels, or where they are both receive channels or whether they are a mix of one transmit and one receive channel.

In one or more examples, the first predetermined distance 116 between any two waveguides 104 of any two transmit channels or any two receive channels may correspond to a distance configured to provide an isolation of at least 35dB between the two communication channels.

In a further example, where the two communication channels comprise one transmit channel and one receive channel, the first predetermined distance 116 between the waveguides 104 of the transmit channel and the receive channel may correspond to a distance configured to provide an isolation of at least 45dB.

It will be appreciated that the isolation value may also be set based on the type of information being transmitted and as such the isolation between the channels may be higher than 35dB or lower than 35dB for the TX-TX or RX-RX arrangements and may be higher than 45dB or lower than 45dB for a TX-RX, RX-TX or TRX-TRX arrangement. In particular, uncoded or otherwise "simple information" that is more prone to errors during transmission may require a higher level of isolation whereas coded or data that is otherwise capable of being corrected may require lower levels of isolation.

It will be appreciated that the openings 114 may be the same cross sectional size and shape as the waveguide 104. In other examples, the openings 114A-D may be the same size or shape as the launcher 108A-D cross section.

In some examples, it will be appreciated that the level of isolation may be achieved without requiring the major dimension 202 of the first opening 114A and the major dimension 202 of the second opening 114B to be exactly 90 degrees to one another. In some examples an angle between the major dimensions greater than 45 degrees may be sufficient.

Figure 5 further shows an arrangement of two launchers 108A, 108B within the IC package 106. The example of figure 5 includes a launcher element 502 that may be fed by a differential microstrip line 504A. In the example of figure 5, the major dimension 302 of the first launcher 108A is oriented perpendicular to the major dimension 302 of the second launcher 108B (it should be noted that the features in the second launcher 108B of figure 5 are equivalent to those of the first launcher 108A and so have not been labelled).

In some examples, the differential microstrip lines may need to turn through 90 degrees to enable one launcher to be orthogonal to another launcher. The routing of the microstrip lines may cause one microstrip line 528 to have a shorter electrical length than the other microstrip line 526. Thus, in one or more examples, one or more of the lines of the microstrip line 504 may include one or more phase delay components 530 comprising a balun coupled to the microstrip line 504 to maintain the required phase difference. In other examples, the one or more baluns may be configured to ensure that the microstrip line 504 operates such that the differential mode is dominant with respect to the common mode. In one or more examples the balun component may be used to maintain the field that is present at the beginning of the microstrip line (i.e., from the differential output at the output of the IC die 122) through to the end of the microstrip line (i.e. just prior to coupling to the launcher 502). In one or more examples the use of the balun component may ensure that a symmetrical field and current distribution is maintained about the line of symmetry 522 of the launcher 502. Thus, it is the use of the balun which maintains the differential input signal that allows for the virtual ground 525 on the launcher 502 to be established. This is due to the resulting symmetric field and current distribution that is set up in the launcher.

It will be appreciated that the balun component may only be required when the microstrip line 504 is rotated about 90 degrees from the output of the IC die 122 to the input to the launcher 502. When the output of the IC die 122 is parallel to the input of the launcher 502, a balun may not be required.

Figure 5 further shows that the differential patch launcher 502 comprises a first rectangular section arranged adjacent to a second rectangular section 508. The first and second rectangular sections may be configured to form a truncated T shape patch launcher 502. In some examples, the lengths and widths of the first and second rectangular sections of the differential patch launcher 502 may allow for improved impedance matching and improved waveguide coupling between the launcher 108 and the waveguide 104.

Figure 7 shows a detailed view of the system 100 and in particular shows the launcher 108 comprising a radiating element 502. Figure 7 also shows the radiating element 502 positioned over the opening 114 in the surface 110 of the waveguide assembly 102. Furthermore, the differential microstrip line 504 is shown as being coupled to the radiating element 502 using vias 704 and through a plurality of layers 702 within the IC package 106.

Figure 8 shows a simplified side cross section of the IC package 106. In one or more examples the IC package 106 may comprise at least one integrated circuit die 122. The package 106 may further comprise a substrate 802 in which the launcher is formed. In some examples each launcher element 502 of the plurality of launchers 108 is coupled to the IC die 122 using a plurality of vias 120, 704, 804 that pass through the plurality of metal layers in the IC die 122, substrate 802 and substrate.

In some examples, the IC package 106 of the system 100 may also comprise one of a bottom coupling flip-chip-chip-scale-package platform (FC-CSP); a top coupling flip-chip-chip-scale-package possum platform; and top or bottom coupling fan-out-wafer-level-package (FO-WLP). It will be appreciated that a FC-CSP (die on top or die on bottom, "possum") launcher substrate may be solder bumped and soldered to a substrate alongside an RF die 122 and interconnected through the FC substrate. Furthermore, it will be appreciated that a FO-WLP (e.g., eWLB) launcher substrate may be embedded within the IC package 106 alongside the IC die 122 and interconnected by a redistribution layer. Both FO-WLP and FC-CSP may allow the use of an area array die and therefore allow the use of a high I/O die which may have a small form factor and thus requires improved channel isolation.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A system (100) comprising:
a waveguide assembly (102) comprising a plurality of waveguides 104(A-D), the plurality of waveguides comprising at least a first waveguide (104A) and a second waveguide (104B), and
an integrated circuit package, IC package (106), comprising a plurality of launchers (108A-D) configured to one or more of transmit signalling to and receive signalling from a respective one of the plurality of waveguides,
wherein the waveguide assembly (102) comprises a surface (110) configured to be located adjacent the IC package (106) and wherein each of the plurality of waveguides (104A-D) comprise an opening (114A-D) in the surface configured to be aligned with its respective launcher(108A-D), and
wherein each of the openings (114A-D) has a major dimension (202) and a minor dimension (204), wherein the major dimension is larger than the minor dimension, and
wherein the major dimension of at least the opening (114A) of the first waveguide (104A) is oriented perpendicular to the major dimension (202) of the opening (114B) of the second waveguide (104B), **characterized in that**
each of the launchers (108A-D) comprise a differential patch launcher (502) comprising a planar body (506) having a slot (518) therein extending from an outer edge along a line of symmetry (522) of the planar body, wherein a differential microstrip line (504) comprising a first line (526) and a second line (528) are coupled to the planar body (506) at opposite sides of the slot (518), and wherein at least one of the first line (526) or the second line (528) of the differential microstrip line (504) comprises a compensation component (530) configured to provide for common mode reduction.

2. The system (100) of claim 1, wherein
each of the plurality of launchers (108A-D) has a major dimension (302) and a minor dimension (304), wherein the major dimension is larger than the minor dimension, and wherein each launcher (108A-D) and the opening (114A-D) of its respective one of the plurality of waveguides (104A-D) is arranged such that the major dimension of the opening (202) is parallel to the major dimension of the launcher (302).

3. The system (100) of claim 2, wherein each of the plurality of launchers (108A-D) comprises a differential patch launcher (502) and the major dimension (302) comprises a length (512) of the differential patch launcher and the minor (304) dimension comprises a width (514) of the differential patch launcher (502).

4. The system (100) of any preceding claim, wherein
each opening (114A-D) of the first waveguide (104A) and the second waveguide (104B) has a rectangular cross section.

5. The system (100) of claims 1 to 3, wherein
each opening (402) of the first waveguide (104A) and the second waveguide (104B) has a rectangular cross section having rounded corners.

6. The system (100) of claims 1 to 3, wherein
each opening (404) of the first waveguide (104A) and the second waveguide (104B) has a dog-bone shaped cross section.

7. The system (100) of any preceding claim, wherein the first waveguide (104A) is spaced apart from the second waveguide by at least a first predetermined distance (206, 208) comprising at least 1 mm.

8. The system (100) of any preceding claim, wherein the waveguide assembly (102) comprises a substrate wherein the plurality of waveguides (104A-D) comprise channels that extend through the substrate.

9. The system (100) of any preceding claim, wherein the IC package (106) is configured to provide for transmission of signalling via the first waveguide (104A) and receipt of signalling via the second waveguide (104B), and wherein the first waveguide and its respective launcher (108A) and the second waveguide (104B) and its respective launcher (108B) are arranged on opposite sides of the waveguide assembly (102) and IC package (106) respectively.

10. The system (100) of any preceding claim, wherein the plurality of waveguides (104A-D) are configured such that:
waveguides of the plurality of waveguides that are arranged with their major dimensions (202) perpendicular to one another are spaced apart by a first minimum spacing (206); and
waveguides of the plurality of waveguides (104A-D) that are arranged with their major dimensions parallel to one another are spaced apart by a second minimum spacing (208);
wherein the first minimum spacing (206) is smaller than the second minimum spacing (208).

11. The system (100) of any preceding claim, wherein the differential patch launcher (502) is shaped such that a predetermined location (525) on the differential patch launcher is at ground potential when in use and wherein the system comprises a detector coupled to said differential patch launcher at the predetermined location (525), wherein the detector is configured to detect current flow in said connection and, based on detection of said current flow, provide a signal.

12. The system (100) of any preceding claim wherein the system includes an interface layer (118) configured to extend between the surface of the waveguide assembly (102) and the IC package (106), wherein the interface layer comprises one of:
a conductive material with openings corresponding to each of the plurality of openings in the plurality of waveguides (104A-D), and
an electromagnetic band-gap structure around each of the plurality of openings in the plurality of waveguides (104A-D).

13. An electronic device (600) comprising one of a telecommunication radio interface and a radar system, including the system (100) of claims 1 to 12.

## Patentansprüche

1. System (100), umfassend:
eine Wellenleiteranordnung (102), die eine Vielzahl von Wellenleitern 104(A-D) umfasst, wobei die Vielzahl von Wellenleitern mindestens einen ersten Wellenleiter (104A) und einen zweiten Wellenleiter (104B) umfasst, und ein integriertes Schaltungsgehäuse, IC-Gehäuse (106), das eine Vielzahl von Einkopplern (108A-D) umfasst, die konfiguriert sind zu einem oder mehreren eines Sendens einer Signalisierung zu und eines Empfangens einer Signalisierung von einem jeweiligen aus der Vielzahl von Wellenleitern,
wobei die Wellenleiteranordnung (102) eine Oberfläche (110) umfasst, die konfiguriert ist, um in der Nähe des IC-Gehäuses (106) angebracht zu werden, und wobei jeder aus der Vielzahl von Wellenleitern (104A-D) in der Oberfläche eine Öffnung (114A-D) umfasst, die konfiguriert ist, um auf seinen jeweiligen Einkoppler (108A-D) ausgerichtet zu werden, und
wobei jede der Öffnungen (114A-D) eine Hauptabmessung (202) und eine Nebenabmessung (204) aufweist, wobei die Hauptabmessung größer als die Nebenabmessung ist, und
wobei die Hauptabmessung von mindestens der Öffnung (114A) des ersten Wellenleiters (104A) senkrecht zur Hauptabmessung (202) der Öffnung (114B) des zweiten Wellenleiters (104B) ausgerichtet ist, **dadurch gekennzeichnet, dass**
jeder der Einkoppler (108A-D) einen differentiellen Patch-Einkoppler (502) umfasst, der einen planaren Körper (506) umfasst, der einen Schlitz (518) aufweist, der sich in dem Körper von einer Außenkante entlang einer Symmetrielinie (522) des planaren Körpers erstreckt,
wobei eine differentielle Mikrostreifenleitung (504), die eine erste Leitung (526) und eine zweite Leitung (528) umfasst, an gegenüberliegenden Seiten des Schlitzes (518) mit dem planaren Körper (506) gekoppelt ist, und wobei die erste Leitung (526) und/oder die zweite Leitung (528) der differentiellen Mikrostreifenleitung (504) eine Kompensationskomponente (530) umfasst, die konfiguriert ist, um eine Gleichtaktreduktion bereitzustellen.

2. System (100) nach Anspruch 1, wobei
jeder aus der Vielzahl von Einkopplern (108A-D) eine Hauptabmessung (302) und eine Nebenabmessung (304) aufweist, wobei die Hauptabmessung größer als die Nebenabmessung ist und wobei jeder Einkoppler (108A-D) und die Öffnung (114A-D) seines jeweiligen aus der Vielzahl von Wellenleitern (104A-D) so angeordnet sind, dass die Hauptabmessung der Öffnung (202) parallel zur Hauptabmessung des Einkopplers (302) ist.

3. System (100) nach Anspruch 2, wobei jeder aus der Vielzahl von Einkopplern (108A-D) einen differentiellen Patch-Einkoppler (502) umfasst und wobei die Hauptabmessung (302) eine Länge (512) des differentiellen Patch-Einkopplers umfasst und die Nebenabmessung (304) eine Breite (514) des differentiellen Patch-Einkopplers (502) umfasst.

4. System (100) nach einem der vorhergehenden Ansprüche, wobei
jede Öffnung (114A-D) des ersten Wellenleiters (104A) und des zweiten Wellenleiters (104B) einen rechteckigen Querschnitt aufweist.

5. System (100) nach einem der Ansprüche 1 bis 3, wobei jede Öffnung (402) des ersten Wellenleiters (104A) und des zweiten Wellenleiters (104B) einen rechteckigen Querschnitt aufweist, der abgerundete Ecken aufweist.

6. System (100) nach einem der Ansprüche 1 bis 3, wobei jede Öffnung (404) des ersten Wellenleiters (104A) und des zweiten Wellenleiters (104B) einen hantelförmigen Querschnitt aufweist.

7. System (100) nach einem der vorhergehenden Ansprüche, wobei der erste Wellenleiter (104A) von dem zweiten Wellenleiter um mindestens einen ersten vorbestimmten Abstand (206, 208) beabstandet ist, der mindestens 1 mm umfasst.

8. System (100) nach einem der vorhergehenden Ansprüche, wobei die Wellenleiteranordnung (102) ein Substrat umfasst, wobei die Vielzahl von Wellenleitern (104A-D) Kanäle umfassen, die sich durch das Substrat erstrecken.

9. System (100) nach einem der vorhergehenden Ansprüche, wobei das IC-Gehäuse (106) konfiguriert ist, um ein Senden einer Signalisierung über den ersten Wellenleiter (104A) und ein Empfangen einer Signalisierung über den zweiten Wellenleiter (104B) bereitzustellen, und wobei der erste Wellenleiter und sein jeweiliger Einkoppler (108A) und der zweite Wellenleiter (104B) und sein jeweiliger Einkoppler (108B) auf gegenüberliegenden Seiten der Wellenleiteranordnung (102) bzw. des IC-Gehäuses (106) angeordnet sind.

10. System (100) nach einem der vorhergehenden Ansprüche, wobei die Vielzahl von Wellenleitern (104A-D) so konfiguriert sind, dass:
Wellenleiter aus der Vielzahl von Wellenleitern, die mit ihren Hauptabmessungen (202) senkrecht zueinander angeordnet sind, um einen ersten minimalen Abstand (206) voneinander beabstandet sind; und
Wellenleiter aus der Vielzahl von Wellenleitern (104A-D), die mit ihren Hauptabmessungen parallel zueinander angeordnet sind, um einen zweiten minimalen Abstand (208) voneinander beabstandet sind;
wobei der erste minimale Abstand (206) kleiner als der zweite minimale Abstand (208) ist.

11. System (100) nach einem der vorhergehenden Ansprüche, wobei der differenzielle Patch-Einkoppler (502) so geformt ist, dass ein vorbestimmter Ort (525) auf dem differenziellen Patch-Einkoppler im Betrieb auf einem Erdpotential liegt und wobei das System einen Detektor umfasst, der an dem vorbestimmten Ort (525) mit dem differenziellen Patch-Einkoppler gekoppelt ist, wobei der Detektor konfiguriert ist, um einen Stromfluss in der Verbindung zu erkennen und um, basierend auf einem Erkennen des Stromflusses, ein Signal bereitzustellen.

12. System (100) nach einem der vorhergehenden Ansprüche, wobei das System eine Grenzflächenschicht (118) beinhaltet, die konfiguriert ist, um sich zwischen der Oberfläche der Wellenleiteranordnung (102) und dem IC-Gehäuse (106) zu erstrecken, wobei die Grenzflächenschicht eines umfasst von:
einem leitfähigen Material mit Öffnungen, die jeder der Vielzahl von Öffnungen in der Vielzahl von Wellenleitern (104A-D) entsprechen, und
einer elektromagnetischen Bandlückenstruktur um jede aus der Vielzahl von Öffnungen in der Vielzahl von Wellenleitern (104A-D) herum.

13. Elektronische Vorrichtung (600), die eine Telekommunikationsfunkschnittstelle und ein Radarsystem umfasst, welches das System (100) nach einem der Ansprüche 1 bis 12 beinhaltet.

## Revendications

1. Système (100) comprenant :
un ensemble guide d'ondes (102) comprenant une pluralité de guides d'onde 104(A-D), la pluralité de guides d'onde comprenant au moins un premier guide d'ondes (104A) et un deuxième guide d'ondes (104B), et
un boîtier de circuit intégré, boîtier IC (106), comprenant une pluralité de lanceurs (108A-D) configurés pour une ou plusieurs transmissions de signalisation vers et recevoir une signalisation à partir d'un guide d'ondes respectif parmi la pluralité de guides d'onde,
l'ensemble guide d'ondes (102) comprenant une surface (110) configurée pour être située à côté du boîtier IC (106) et chacun de la pluralité de guides d'onde (104A-D) comprenant une ouverture (114A-D) dans la surface configurée pour être alignée avec son lanceur respectif (108A-D), et
chacune des ouvertures (114A-D) ayant une dimension principale (202) et une dimension secondaire (204), la dimension principale étant plus grande que la dimension secondaire, et
la dimension principale d'au moins l'ouverture (114A) du premier guide d'onde (104A) étant orientée perpendiculairement à la dimension principale (202) de l'ouverture (114B) du deuxième guide d'onde (104B),
**caractérisé en ce que**
chacun des lanceurs (108A-D) comprend un lanceur de patch différentiel (502) comprenant un corps plan (506) ayant une fente (518) s'étendant à partir d'un bord extérieur le long d'une ligne de symétrie (522) du corps plan, une ligne à microruban différentielle (504) comprenant une première ligne (526) et une seconde ligne (528) étant couplées au corps plan (506) sur des côtés opposés de la fente (518), et au moins l'une de la première ligne (526) ou de la deuxième ligne (528) de la ligne à microruban différentielle (504) comprenant un composant de compensation (530) configuré pour assurer une réduction de mode commun.

2. Système (100) selon la revendication 1,
chacun de la pluralité de lanceurs (108A-D) ayant une dimension principale (302) et une dimension secondaire (304), la dimension principale étant supérieure à la dimension secondaire, et chaque lanceur (108A-D) et l'ouverture (114A-D) de son guide d'ondes respectif de la pluralité de guides d'onde (104AD) étant disposés de telle sorte que la dimension principale de l'ouverture (202) soit parallèle à la dimension principale du lanceur (302).

3. Système (100) selon la revendication 2, chacun de la pluralité de lanceurs (108A-D) comprenant un lanceur de patch différentiel (502) et la dimension principale (302) comprenant une longueur (512) du lanceur de patch différentiel et la dimension secondaire (304) comprenant une largeur (514) du lanceur de patch différentiel (502).

4. Système (100) selon l'une quelconque des revendications précédentes,
chaque ouverture (114A-D) du premier guide d'ondes (104A) et du second guide d'ondes (104B) ayant une section transversale rectangulaire.

5. Système (100) selon les revendications 1 à 3, chaque ouverture (402) du premier guide d'ondes (104A) et du second guide d'ondes (104B) ayant une section transversale rectangulaire ayant des coins arrondis.

6. Système (100) selon les revendications 1 à 3, chaque ouverture (404) du premier guide d'ondes (104A) et du second guide d'ondes (104B) ayant une section transversale en forme d'os de chien.

7. Système (100) selon l'une quelconque des revendications précédentes, le premier guide d'ondes (104A) étant espacé du second guide d'ondes d'au moins une première distance prédéterminée (206, 208) comprenant au moins 1 mm.

8. Système (100) selon l'une quelconque des revendications précédentes, l'ensemble guide d'ondes (102) comprenant un substrat, la pluralité de guides d'onde (104A-D) comprenant des canaux qui s'étendent à travers le substrat.

9. Système (100) selon l'une quelconque des revendications précédentes, le boîtier IC (106) étant configuré pour assurer la transmission d'une signalisation via le premier guide d'ondes (104A) et la réception d'une signalisation via le second guide d'ondes (104B), et le premier guide d'ondes et son lanceur respectif (108A) et le second guide d'ondes (104B) et son lanceur respectif (108B) étant agencés respectivement sur des côtés opposés de l'ensemble guide d'ondes (102) et du boîtier IC (106).

10. Système (100) selon l'une quelconque des revendications précédentes, la pluralité de guides d'onde (104A-D) étant configurés de sorte que :
des guides d'onde de la pluralité de guides d'onde qui sont agencés avec leurs dimensions principales (202) perpendiculaires entre elles sont espacés d'un premier espacement minimal (206) ; et
des guides d'onde de la pluralité de guides d'onde (104AD) qui sont agencés avec leurs dimensions principales parallèles entre elles sont espacés d'un deuxième espacement minimal (208) ;
le premier espacement minimal (206) étant plus petit que le deuxième espacement minimal (208).

11. Système (100) selon l'une quelconque des revendications précédentes, le lanceur de patch différentiel (502) étant conformé de telle sorte qu'un emplacement prédéterminé (525) sur le lanceur de patch différentiel soit au potentiel de masse lorsqu'il est utilisé et le système comprenant un détecteur couplé audit lanceur de patch différentiel à l'emplacement prédéterminé (525), le détecteur étant configuré pour détecter le flux de courant dans ladite connexion et, sur la base de la détection dudit flux de courant, fournir un signal.

12. Système (100) selon l'une quelconque des revendications précédentes, le système comprenant une couche d'interface (118) configurée pour s'étendre entre la surface de l'ensemble guide d'ondes (102) et le boîtier IC (106), la couche d'interface comprenant un élément parmi :
un matériau conducteur avec des ouvertures correspondant à chacune de la pluralité d'ouvertures dans la pluralité de guides d'onde (104A-D), et
une structure électromagnétique à bande interdite autour de chacune de la pluralité d'ouvertures de la pluralité de guides d'onde (104A-D).

13. Dispositif électronique (600) comprenant un élément parmi une interface radio de télécommunication et un système radar, comprenant le système (100) selon les revendications 1 à 12.
